# EUROPÄISCHE PATENTSCHRIFT

(11) **EP 2 675 829 B1**
(45) Veröffentlichungstag und Bekanntmachung des Hinweises auf die Patenterteilung: **04.05.2016**
(21) Anmeldenummer: 12705245.4
(22) Anmeldetag: 13.02.2012
(51) Int. Cl.: C08G 12/12, C08L 61/24

(54) **VERFAHREN ZUR HERSTELLUNG VON KONDENSATIONSHARZEN**
PROCESS FOR PRODUCING CONDENSATION RESINS
PROCÉDÉ DE PRODUCTION DE RÉSINES DE CONDENSATION

(30) Priorität: 14.02.2011 EP 11154334
(43) Veröffentlichungstag der Anmeldung: 25.12.2013
(73) Patentinhaber: BASF SE, 67056 Ludwigshafen am Rhein (DE)
(72) Erfinder: MEUER, Stefan, 67549 Worms (DE); MENZEL, Klaus, 67069 Ludwigshafen (DE); STEHMEIER, Kai, 68199 Mannheim (DE); SCHERR, Günter, 67065 Ludwigshafen (DE)
(74) Vertreter: BASF IP Association
(86) Internationale Anmeldenummer: PCT/EP2012/052368
(87) Internationale Veröffentlichungsnummer: WO 2012/110436

(56) Entgegenhaltungen:
- EP-A1- 0 008 420
- EP-A2- 0 210 471
- WO-A1-03/059978
- WO-A1-2007/028752
- WO-A1-2011/009765
- US-A- 4 243 797

## Beschreibung

Die vorliegende Erfindung betrifft ein neues Verfahren zur Herstellung von Kondensationsharzen, formal aufgebaut aus Harnstoff, Formaldehyd und CH-aciden Aldehyden.

Kondensationsprodukte aus Harnstoff bzw. seinen Derivaten mit Formaldehyd und CH-aciden Aldehyden sind bereits aus der Patentliteratur bekannt. Derartige Kondensationsharze werden häufig zur Bereitung von Pigmentpräparationen eingesetzt.

Nachteilig an dieser Verfahrensführung ist die Anwesenheit von Formaldehyd aufgrund dessen Toxizität und von CH-aciden Aldehyden, die als freie Aldehyde einen relativ niedrigen Flammpunkt aufweisen. So weist beispielsweise iso-Butyraldehyd eine Zündtemperatur von etwa 190°C auf, so daß die Herstellungsanlage mit speziellen Sicherheitsmechanismen ausgerüstet werden muß.

WO 2011/009765, WO 2007/028752, US 4243797, EP 0210471 und EP 0008420 beschreiben Verfahren zur Herstellung von Kondensationsharzen aus einem Harnstoff, Formaldehyd und einem CH-aciden Aldehyd.

WO 03/059978 gibt einen Hinweis, dass 3-Hydroxypropionaldehydderivate *in situ* aus Formaldehyd und CH-aciden Verbindungen erhalten werden können.

Aufgabe der vorliegenden Erfindung war es, eine Herstellungsverfahren von Kondensationsprodukten, abgeleitet von Harnstoff, Formaldehyd und CH-aciden Aldehyden, zu entwickeln, das auf den unmittelbaren Einsatz von Formaldehyd und CH-aciden Aldehyden verzichten kann.

Die Aufgabe wurde gelöst durch ein Verfahren zur Herstellung von Kondensationsharzen, enthaltend als formale Aufbaukomponenten Harnstoff, Formaldehyd und CH-aciden Aldehyden, durch Umsetzung von mindestens einem, bevorzugt genau einem Harnstoff der allgemeinen Formel (I) und/oder (II) 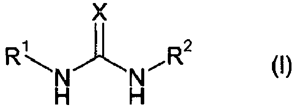 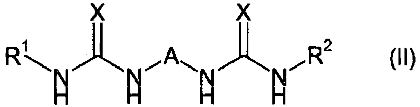 worin R¹ und R² unabhängig voneinander Wasserstoff oder gleiche oder verschiedene C₁ - C₂₀-Alkylreste , A einen C₁ - C₂₀-Alkylenrest und X Sauerstoff oder Schwefel bedeuten, mit mindestens einem, bevorzugt genau einem 3-Hydroxypropionaldehydderivat der Formel (IIIa) 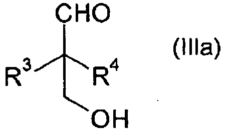 worin die Reste R³ und R⁴ unabhängig voneinander gleiche oder verschiedene Alkyl-, Cycloal-kyl-, Aryl-, oder Alkylarylreste bedeuten oder R³ und R⁴ gemeinsam einen Ring bilden können, umsetzt, wobei Harnstoff und 3-Hydroxypropionaldehydderivat in einem Molverhältnis von 1:2 bis 1:12 miteinander umgesetzt werden und das 3-Hydroxypropionaldehydderivat der Formel (IIIa) einen Gehalt an Formaldehyd, in als Formal gebundener oder ungebundener Form, von nicht mehr als 5 Gew% aufweist.

Ein Vorteil des erfindungsgemäßen Verfahrens besteht darin, dass man auf die unmittelbare Anwesenheit von Formaldehyd und CH-aciden Aldehyden in der Herstellung der Kondensationsharze verzichten kann.

Unter "Kondensationsharzen, abgeleitet von Harnstoff, Formaldehyd und CH-aciden Aldehyden" wird dabei im Rahmen der vorliegenden Erfindung verstanden, daß die betreffenden Kondensationsharze als formale Aufbaukomponenten Harnstoff, Formaldehyd und CH-aciden Aldehyd enthalten und auch durch Reaktion dieser drei Verbindungen erhältlich sind.

Zu den Aufbaukomponenten der erfindungsgemäßen Harze ist im Einzelnen folgendes auszuführen:

Als Harnstoffe eignen sich solche der allgemeinen Formel (I) oder (II) 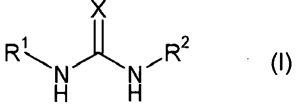 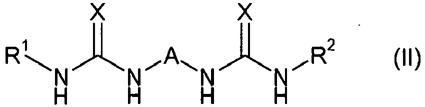 worin R¹ und R² unabhängig voneinander Wasserstoff oder gleiche oder verschiedene C₁ - C₂₀-, bevorzugt C₁- bis C₄-Alkylreste , A einen C₁ - C₂₀-, bevorzugt C₁ bis C₄-, besonders bevorzugt C₁- bis C₃- und ganz besonders bevorzugt C₁- bis C₂-Alkylenrest und X Sauerstoff oder Schwefel, bevorzugt Sauerstoff bedeuten,

Neben Harnstoff oder Thioharnstoff können auch mono- und disubstituierte Harnstoffe sowie Alkylendiharnstoffe eingesetzt werden.

Bevorzugt dient Harnstoff (H₂N-(CO)-NH₂) zur Herstellung der erfindungsgemäßen Harze.

In den erfindungsgemäß einzusetzenden 3-Hydroxypropionaldehydderivaten der Formel (IIIa) 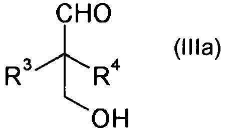 bedeuten die Reste R³ oder R⁴ unabhängig voneinander gleiche oder verschiedene C₁ - C₂₀-, bevorzugt C₁- bis C₄-Alkyl-, C₃ - C₂₀-, bevorzugt C₅- bis C₁₂-Cycloalkyl-, C₆ - C₂₀-, bevorzugt C₆- bis C₁₂-Aryl-, oder Alkylarylreste oder R³ und R⁴ können gemeinsam einen Ring bilden.

Beispiel für C₁ - C₂₀-Alkylreste sind Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl und 1,1,3,3-Tetramethylbutyl.

Beispiel für C₃ - C₂₀-Cycloalkylreste sind Cyclopropyl, Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, und Norbornyl.

Beispiele für C₆ - C₂₀-Ary)- oder Alkylarylreste sind Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, *iso*-Propylphenyl, tert.-Butylphenyl, Dödecylphenyl, Benzyl, 1-Phenylethyl, 2-Phenylethyl, α,α-Dimethylbenzyl, Benzhydryl, p-Tolylmethyl und1-(p-Butylphenyl)-ethyl.

Unter C₁-C₄-Alkyl wird im Rahmen dieser Schrift Methyl, Ethyl, *iso*-Propyl, n-Propyl, n-Butyl, *iso*Butyl, *sek*-Butyl und *tert*-Butyl verstanden, bevorzugt Methyl, Ethyl, n-Propyl und n-Butyl, besonders bevorzugt Methyl und Ethyl und ganz besonders bevorzugt Methyl.

Beispiele für Reste R¹ und R² sind unabhängig voneinander Wasserstoff und C₁ bis C₄-Alkyl, bevorzugt Wasserstoff und Methyl und besonders bevorzugt Wasserstoff.

Möglich Alkylenreste A sind beispielsweise Methylen, 1,2-Ethylen, 1,2-Propylen, 1,3-Propylen, 1,4-Butylen, 1,6-Hexylen, 2-Methyl-1,3-Propylen, 2-Ethyl-1,3-Propylen, 2,2-Dimethyl-1,3-Propylen und 2,2-Dimethyl-1,4-butylen.

Bevorzugte Reste A sind Methylen, 1,2-Ethylen, 1,2-Propylen und 1,3-Propylen, besonders bevorzugt sind Methylen und 1,2-Ethylen und besonders bevorzugt ist Methylen.

Bevorzugt sind die Reste R³ und R⁴ sind unabhängig voneinander bevorzugt Alkyl oder Cycloalkyl, besonders bevorzugt C₁ bis C₄-Alkyl, ganz besonders bevorzugt Methyl, Ethyl, n-Propyl und n-Butyl, insbesondere Methyl, Ethyl und n-Butyl und speziell Methyl.

Bilden die Reste R³ und R⁴ gemeinsam mit dem der Carbonylgruppe benachbarten Kohlenstoffatom C_{∝} einen Ring, so handelt es sich dabei bevorzugt um einen fünf- bis zwölfgliedrigen Ring, beispielsweise Cyclopentyl, Cyclohexyl, Cyclooctyl oder Cyclododecyl, bevorzugt Cyclopentyl, Cyclohexyl oder Cyclododecyl und besonders bevorzugt Cyclopentyl oder Cyclohexyl.

Beispiele für 3-Hydroxypropionaldehydderivate der Formel (IIIa) sind bevorzugt ausschließlich Alkyl- und/oder Cycloalkylgruppen aufweisende 3-Hydroxypropionaldehydderivate.

Besonders bevorzugt sind 3-Hydroxy-2,2-dimethylpropionaldehyd, 3-Hydroxy-2-ethyl-2-n-butyl-propionaldehyd, 3-Hydroxy-2-methyl-2-n-propyl-propionaldehyd und 3-Hydroxy-2-ethyl-2-n-butyl-propionaldehyd, ganz besonders bevorzugt ist 3-Hydroxy-2,2-dimethylpropionaldehyd.

Die 3-Hydroxypropionaldehydderivate der Formel (IIIa) werden bevorzugt durch Aldolreaktion der korrespondierenden CH-aciden Aldehyde der allgemeinen Formel (III) 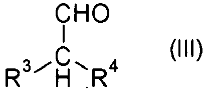 worin die Reste R³ und R⁴ wie oben definiert sind, mit Formaldehyd erhalten.

Unter CH-aciden Aldehyden sind dabei solche Aldehyde zu verstehen, die an dem der Carbonylgruppe benachbarten Kohlenstoffatom C_{∝} genau ein Wasserstoffatom aufweisen.

Beispiele für CH-acide Aldehyde sind bevorzugt ausschließlich Alkyl- und/oder Cycloalkylgruppen aufweisende CH-acide Aldehyde, besonders bevorzugt Isobutyraldehyd, 2-Ethylhexanal, 2-Methylpentanal und Isovaleraldehyd, ganz besonders bevorzugt Isobutyraldehyd, 2-Ethylhexanal und 2-Methylpentanal und insbesondere Isobutyraldehyd.

Der Formaldehyd kann als wässrige, z.B. als 30 bis 55%ige, bevorzugt bevorzugt 35 bis 49 %ige, besonders bevorzugt 40 bis 49 %ige Lösung, als Paraformaldehyd oder in Form von Trioxan, Tetroxan oder Formaldehydacetalen eingesetzt werden, bevorzugt in wässriger Lösung.

Die Aldolreaktion wird allgemeinen im Temperaturbereich zwischen 40 und 120, vorzugsweise 50 und 100 °C und besonders bevorzugt von 50 bis 80 °C durchgeführt.

Katalysiert wird die Reaktion in der Regel durch Anwesenheit von tertiären Aminen, bevorzugt wie Trimethylamin oder Triethylamin. Beispiele für geeignete Katalysatoren sind beschrieben in DE 2507461, Spalte 4, Zeile 21 bis Spalte 5, Zeile 21, besonders Spalte 6, Zeile 68 bis Spalte 7, Zeile 54, (=GB 1535826, Seite 2, Zeile 23 bis Seite 3, Zeile 6 und besonders Seite 4, Zeile 31 bis Seite 5, Zeile 51), DE 2714516, Seite 7, 3. Absatz bis Seite 8, 2. Absatz (= US 4233247, Spalte 2, Zeile 53 bis Spalte 3, Zeile 21) und DE 2702282 Seite 6, Zeile 13 bis Seite 7, Zeile 17. Die angegebenen Textstellen dieser Schriften seien hiermit Bestandteil der vorliegenden Offenbarung.

Die beschriebene Aldolreaktion ist der erste Schritt für die großtechnische Synthese von Diolen durch Umsetzung von CH-acidem Aldehyd (III) mit Formaldehyd zu dem 3-Hydroxypropionaldehydderivate der Formel (IIIa), gefolgt von einer Cannizzarro-Reaktion oder Hydrierung in einem zweiten Schritt zur Reduktion der Aldehydgruppe.

Diole, die häufig nach diesem Verfahren hergestellt werden, sind beispielsweise Neopentylglykol (2,2-Dimethyl-1,3-propandiol) und 2-Ethyl-2-n-Butyl-1,3-propandiol.

Diesen Verfahren wird das 3-Hydroxypropionaldehydderivate der Formel (IIIa) in der Regel in Form einer 30 bis 90%igen, bevorzugt 40 bis 80 und besonders bevorzugt 60 bis 75%igen wäßrigen Lösung entnommen. Formaldehyd ist aus diesen Lösungen in der Regel bereits entfernt, kann jedoch noch über Hydroxygruppen in Form von Formalen gebunden sein. Der Gehalt an Formaldehyd, in als Formal gebundener oder ungebundener Form, beträgt nicht mehr als 5 Gew%, bevorzugt nicht mehr als 3, besonders bevorzugt nicht mehr als 1 und ganz besonders bevorzugt nicht mehr als 0,5 Gew%.

Somit ist es mit Hilfe des erfindungsgemäßen Verfahrens möglich, den mit den eingangs erwähnten Nachteilen verbundenen Umgang mit Formaldehyd und CH-acidem Aldehyd (III) auf ein Verfahren, nämlich in dem Verfahren zur Herstellung von 3-Hydroxypropionaldehyd als Zwischenprodukt in der Herstellung von Diolen, zu beschränken, so daß nur noch eine räumlich getrennte Herstellungsanlage, statt wie bisher zwei, mit speziellen Sicherheitsmechanismen ausgerüstet werden muß.

Für das erfindungsgemäße Verfahren werden Harnstoff und 3-Hydroxypropionaldehydderivat in einem Molverhältnis von 1:2 bis 1:12, bevorzugt 1:3 bis 1:10 und ganz besonders bevorzugt von 1:4 bis 1:8 eingesetzt.

Das erfindungsgemäße Verfahren wird bevorzugt in Gegenwart von Säuren oder Basen als Katalysator und optional in Gegenwart von Lösungs- und/oder Verdünnungsmittel durchgeführt.

Als Säuren eignen sich anorganische und organische Säuren, vorzugsweise Säuren mit einem pKs-Wert bis zu 3. Beispiele dafür sind Schwefelsäure, Phosphorsäure, Salpetersäure, Salzsäure, Phosphorige Säure (H₃PO₃), Diphosphorsäure (H₄P₂O₇), Sulfonsäuren, besonders bevorzugt Methansulfonsäure, Trifluormethansulfonsäure, para-Toluolsulfonsäure, Benzolsulfonsäure, Dodecylbenzolsulfonsäure, Cyclododecansulfonsäure, Kamphersulfonsäure oder saure Ionentauscher mit Sulfonsäuregruppen, sowie Ameisensäure.

Es ist auch möglich, wenn auch weniger bevorzugt, die Kondensation basisch zu katalysieren. Dazu können basische Alkalimetall-, Erdalkalimetall- oder quartäre Ammoniumverbindungen, bevorzugt Alkalimetallverbindungen, besonders bevorzugt Natrium oder Kalium, ganz besonders bevorzugt Natrium, beispielsweise Oxide, Hydroxide (OH⁻), Carbonate (CO₃²⁻), Amide (NH₂⁻) oder C₁ bis C₂₀-Alkanolate, bevorzugt Hydroxide oder C₁ bis C₄-Alkanolate, besonders bevorzugt Hydroxide, Methanolate, Ethanolat oder tert.-Butanolate, ganz besonders bevorzugt Hydroxide oder Methanolate eingesetzt werden.

Der Katalysator wird im Allgemeinen in Mengen von 0,5 bis 30 Mol% bezogen auf den CH-aciden Aldehyd eingesetzt, bevorzugt in Mengen von 2 bis 20, besonders bevorzugt 3 bis 10 Mol%

Insbesondere wenn man basische Verbindungen einsetzt, so können zusätzlich auch Phasentransferkatalysatoren zugesetzt werden.

Bevorzugte Phasentransferkatalysatoren sind tetrasubstituierte Ammoniumsalze, besonders bevorzugt der Formel

⁺NR⁵R⁶R⁷R⁸ X⁻,

worin
R⁵ bis R⁸ jeweils unabhängig voneinander C₁ bis C₂₀-Alkyl oder C₆ bis C₂₀- Alkylarylreste und
X⁻ ein Anion einer Säure
bedeuten.

Bevorzugt weisen die Reste R⁵ bis R⁸ in Summe mindestens 8, bevorzugt mindestens 12, besonders bevorzugt mindestens 15 Kohlenstoffatome auf.

Beispiele für Anionen X⁻ sind Chlorid, Bromid, Iodid, Sulfat, Methylsulfat, Ethylsulfat, Methylcarbonat, Trifluormethansulfonat, C₁-C₂₀-Alkylsulfonat oder C₆-C₂₀-Alkylarylsulfonat.

Bei der Durchführung des erfindungsgemäßen Verfahrens können optional Lösungs- und/oder Verdünnungsmittel, gegebenenfalls auch als Schleppmittel zur azeotropen Entfernung von Wasser mitverwendet werden. Als Lösungsmittel zur azeotropen Entfernung von Wasser eignen sich vor allem aliphatische, cycloaliphatische und aromatische Kohlenwasserstoffe oder Gemische davon. Vorzugsweise kommen n-Pentan, n-Hexan, n-Heptan, Cyclohexan, Methylcyclohexan, Benzol, Toluol oder Xylol zur Anwendung. Besonders bevorzugt sind Cyclohexan, Methylcyclohexan, Xylol und Toluol.

Als Lösungsmittel haben sich besonders aromatische Kohlenwasserstoffe bewährt. Unter diesen ist besonders Xylol hervorzuheben.

Der Einsatz von Schleppmitteln zur azeotropen Entfernung von Wasser ist im erfindungsgemäßen Verfahren bevorzugt.

Das erfindungsgemäße Verfahren wird allgemeinen im Temperaturbereich von 70 bis 150, vorzugsweise von 80 bis 120°C und besonders bevorzugt von 80 bis 100 °C durchgeführt.

Je nach Temperatur erfordet die Reaktion in der Regel eine Dauer von 10 Minuten bis 6 Stunden, bevorzugt von 30 bis 5 Stunden, besonders bevorzugt von 1 bis 4 Stunden.

Beim erfindungsgemäßen Verfahren ist es nicht zwingend erforderlich, das Reaktionsgemisch wasserfrei zu gestalten. Es ist in der Regel ausreichend, das Wasser aus dem Reaktionsgemisch bis auf einen Gehalt von nicht mehr als 5 Gew%, bevorzugt nicht mehr als 2,5 Gew% abzutrennen.

Die Herstellung des Kondensationsharzes kann optional weiterhin in Gegenwart mindestens einer, beispielsweise 1 bis 4, bevorzugt 1 bis 3, besonders bevorzugt 1 bis 2 und ganz besonders bevorzugt genau einer Verbindung (IV) durchgeführt werden, die genau zwei nukleophile Gruppen aufweist, ausgewählt aus der Gruppe bestehend aus Hydroxygruppen (-OH), primären Aminogruppen (-NH₂), sekundären Aminogruppen (-NH-) und Thiolgruppen (-SH), bevorzugt ausgewählt aus der Gruppe bestehend aus Hydroxygruppen (-OH), primären Aminogruppen (-NH₂) und sekundären Aminogruppen (-NH-), besonders bevorzugt ausgewählt aus der Gruppe bestehend aus Hydroxygruppen (-OH) und primären Aminogruppen (-NH₂) und ganz besonders bevorzugt handelt es sich bei den nukleophilen Gruppen um Hydroxygruppen (-OH). Die Anwesenheit mindestens einer Verbindung (IV) ist bevorzugt.

Dabei kann die Verbindung (IV) zwei gleiche nukleophile Gruppen aufweisen, so daß es sich um ein Diol, ein Diamin oder ein Dithiol handelt, die Verbindung (IV) kann aber auch unterschiedliche nukleophile Gruppen tragen, so daß es sich um einen Aminoalkohol, einen Mercaptoalkohol oder ein Mercaptoamin handelt.

Bevorzugte Verbindungen (IV) sind Diole, Diamine, Aminoalkohole und Mercaptoalkohole, besonders bevorzugt sind Diole, Diamine und Aminoalkohole, ganz besonders bevorzugt sind Diole und Aminoalkohole und insbesondere Diole.

Bevorzugt handelt es sich bei dem Diol um ein Alkandiol oder Cycloalkandiol, besonders bevorzugt ein 1,2- oder 1,3-Alkandiol.

Das Diol ist bevorzugt niedermolekular, d.h. es weist bevorzugt ein Molekulargewicht unter 400 g/mol auf.

Besonders bevorzugt handelt es sich bei dem Diol um Ethylenglykol, 1,2-Propandiol, 1,3-Propandiol, 3-Methylpentan-1,5-diol, 2-Ethyl-1,3-Hexandiol, Diethylenglykol, Dipropylenglykol, 2,4-Diethyl-oktan-1,3-diol, 1,1-Dimethylethan-1,2-diol, 2-Butyl-2-ethyl-1,3-Propandiol, 2-Ethyl-2-Methyl-1,3-Propandiol, Neopentylglykol, Hydroxypivalinsäureneopentylglykolester, 1,2-, 1,3- oder 1,4-Butandiol, 1,6-Hexandiol, 1,10-Dekandiol, 2,2-Bis(4-hydroxycyclohexyl)propan, 1,1-, 1,2-, 1,3- und 1,4-Cyclohexandimethanol, Tetramethylcyclobutandiol, 1,2-, 1,3- oder 1,4-Cyclohexandiol, Cyclooctandiol, Norbornandiol, Pinandiol, Decalindiol, Hydrochinon, Bisphenol A, Bisphenol F, Bisphenol B und Bisphenol S.

Ganz besonders bevorzugt handelt es sich um 1,2-Propandiol, Ethylenglykol, 1,3-Propandiol oder Neopentylglykol.

Beispiele für Diamine sind solche Verbindungen, die zwei primäre und/oder sekundäre Aminogruppen aufweisen, bevorzugt entweder zwei primäre oder zwei sekundäre Aminogruppen und besonders bevorzugt zwei primäre Aminogruppen.

Bevorzugte Diamine sind Alkandiamine, mit einem 2 bis 20, bevorzugt 2 bis 12, besonders bevorzugt 2 bis 6 Kohlenstoffatome aufweisenden linearen oder verzweigten und optional substituierten Alkylenrest, Cycloalkandiamine, mit einem 3 bis 12, bevorzugt 5 bis 6 Kohlenstoffatome aufweisenden optional substituierten Cycloalkylenrest, Arylendiamine, mit einem 6 bis 12, bevorzugt 6 Kohlenstoffatome aufweisenden optional substituierten Arylenrest und 4 bis 12, bevorzugt 4 bis 8 Kohlenstoffatome aufweisende Diazacycloalkane. Unter diesen sind Alkandiamine und Diazacycloalkane bevorzugt, besonders bevorzugt sind Alkandiamine.

Beispiele für Alkandiamine sind 1,2-Ethylendiamin, 1,3-Propylendiamin, 1,4-Butandiamin, 1,5-Pentandiamin, 1,6-Hexandiamin, 2,2,4-Trimethylhexan-1,6-diamin, 2,2,4,4-Tetramethylhexan-1,6-diamin, 1,8-Octandiamin, 1,10-Decandiamin und 1,12-Dodecandiamin, bevorzugt sind 1,2-Ethylendiamin, 1,3-Propylendiamin, 1,4-Butandiamin, 1,5-Pentandiamin und 1,6-Hexandiamin, besonders bevorzugt sind 1,2-Ethylendiamin 1,4-Butandiamin und 1,6-Hexandiamin, ganz besonders bevorzugt sind 1,2-Ethylendiamin und 1,6-Hexandiamin.

Denkbar ist ferner 2,2'-Oxydiethanamin (2-(2'-Aminoethoxy)-ethylamin), Ornithin-C₁-C₄-alkylester oder Lysin-C₁-C₄-alkylester.

Beispiele für Cycloalkandiamine sind 1,4-, 1,3- oder 1,2-Diaminocyclohexan oder 2,4-, oder 2,6-Diamino-1-methylcyclohexan

Weitere Cycloalkangruppen enthaltende Diamine sind 4,4'- oder 2,4'-Di(aminocyclohexyl)-methan, 1-Amino-3,3,5-trimethyl-5-(aminomethyl)cyclohexan (Isophorondiamin), 1,3- oder 1,4-Bis(aminomethyl)cyclohexan sowie 3 (bzw. 4), 8 (bzw. 9)-Bis(aminomethyl)-tricyclo[5.2.1.02.6]decan-lsomerengemische.

Beispiele für Arylendiamine sind 1,2-, 1,3- und 1,4-Phenylendiamine, 2,4- und 2,6-Toluylendiamin sowie deren Isomerengemische.

Ein zu erwähnendes Diazacycloalkan ist Piperazin.

Als Dithiole zu nennen sind beispielsweise 1,2-Ethandithiol, 1,3-Propandithiol, 2,2-Dimethyl-1,3-propandithiol, 1,4-Butandithiol, 1,5-Pentandithiol und 2,2'-Oxydiethanthiol, bevorzugtsind 1,2-Ethandithiol und 1,3-Propandithiol.

Als Aminoalkohol zu nennen sind beispielsweise Alkanolamine, mit einem 2 bis 20, bevorzugt 2 bis 12, besonders bevorzugt 2 bis 6 Kohlenstoffatome aufweisenden linearen oder verzweigten und optional substituierten Alkylenrest, Cycloalkanolamine, mit einem 3 bis 12, bevorzugt 5 bis 6 Kohlenstoffatome aufweisenden optional substituierten Cycloalkylenrest, Aminophenole, mit einem 6 bis 12, bevorzugt 6 Kohlenstoffatome aufweisenden optional substituierten Arylenrest.

Beispiele für Alkanolamine sind 2-Aminoethan-1-ol, 2-Aminopropan-1-ol, 1-Aminopropan-2-ol, 3-Aminopropan-1-ol, 4-Aminobutan-1-ol, 6-Aminohexan-1-ol, N-Methyldiethanolamin, N-Methyldipropanolamin, 2-Amino-1-phenylethanol und 2-Amino-2-phenylethanol. Bevorzugt sind 2-Aminoethan-1-ol und 2-Aminopropan-1-ol.

Denkbar ist ferner Serin-C₁-C₄-alkylester oder Threonin-C₁-C₄-alkylester.

Cycloalkanolamine sind beispielsweise 2-Aminocyclopentan-1-ol, 2-Aminocyclohexan-1-ol, 2-Aminocyclooctan-1-ol und 2-Aminocyclododecan-1-ol.

Aminophenole sind beispielsweise 2-Aminophenol, 3-Aminophenol und 4-Aminophenol sowie Tyrosin-C₁-C₄-alkylester.

Als Mercaptoalkohole zu nennen sind beispielsweise 2-Mercaptoethanol, 2-Mercaptophenol und 2-Hydroxy-1-propanthiol.

Als Mercaptoamine zu nenen sind beispielsweise 2-Aminothiophenol, 4-Aminothiophenol, 2-Mercaptoethylamin, Cystein-C₁-C₄-alkylester und Homocystein-C₁-C₄-alkylester.

Die Verbindung (IV) kann bereits von Beginn der Reaktion an vorliegen, bevorzugt wird es jedoch zugegeben, wenn Harnstoff und 3-Hydroxypropionaldehydderivat bereits zumindest teilweise miteinander reagiert haben.

Da das 3-Hydroxypropionaldehydderivat (IIIa) wie oben beschrieben bevorzugt der Synthese von Diolen entnommen werden kann und bei der Herstellung des 3-Hydroxypropionaldehydderivats (IIIa) bereits durch Cannizzarro-Reaktion des 3-Hydroxypropionaldehydderivats mit Formaldehyd ein geringer Anteil an Diol entstanden sein und demzufolge in der eingesetzten Lösung des 3-Hydroxypropionaldehydderivats (IIIa) enthalten sein kann, stellt es eine bevorzugte Ausführungsform der vorliegenden Erfindung dar, wenn eine Verbindung (IV) anwesend ist, als Verbindung (IV) das zu dem Hydroxypropionaldehydderivat (IIIa) korrespondierende Diol einzusetzen.

Dies ist beispielsweise bei 3-Hydroxy-2,2-dimethylpropionaldehyd als Verbindung (IIIa) Neopentylglykol (2,2-Dimethyl-1,3-propandiol) als Verbindung (IV).

Der Umsatz kann beispielsweise anhand der ausgetragenen Menge Wasser bestimmt werden, aber auch durch Verfolgung der Viskosität des Reaktionsgemischs. Bevorzugt wird der Umsatz bezogen auf die bereits umgesetzten Aldehydfunktionen. Die freien Aldehydfunktionen werden bevorzugt bestimmt nach der Methode von De Jong (DIN EN ISO 9020). Der so bestimmte Umsatz sollte in der Regel mindestens 30%, bevorzugt mindestens 40%, besonders bevorzugt mindestens 50, ganz besonders bevorzugt mindestens 60 und insbesondere mindestens 70% betragen.

In der Regel sollte der Umsatz zum Zeitpunkt der Zugabe der Verbindung (IV) nicht weiter als 99,9% fortgeschritten sein, bevorzugt nicht mehr als 99,5%, besonders bevorzugt nicht mehr als 98%, ganz besonders bevorzugt nicht mehr als 95% und insbesondere nicht mehr als 90%.

Die Verbindung (IV) kann dem Reaktionsgemisch portionsweise oder bevorzugt in einer Zugabe zugegeben werden.

Die Reaktion sollte nach Zugabe der Verbindung (IV) noch mindestens 1 Stunde bei einer Temperatur von 50 bis 150 °C fortgeführt werden, so dass die Verbindung (IV) im Wesentlichen in das Kondensationsharz eingebaut ist. Falls gewünscht kann die Reaktion nach der Zugabe bei Über- oder Unterdruck weitergeführt werden, bevorzugt bei Unterdruck.

Die Menge der Verbindung (IV) beträgt bezogen auf die eingesetzte Menge Harnstoff 0,3 bis 4 Äquivalente, bevorzugt 0,5 bis 3,5 Äquivalente und besonders bevorzugt 0,7 bis 2,5 Äquivalente.

Es stellt eine bevorzugte Ausführungsform dar, die erfindungsgemäße Reaktion zusätzlich in Gegenwart mindestens eines, beispielsweise ein bis drei, bevorzugt ein bis zwei und besonders bevorzugt genau eines Alkohols (V), bevorzugt eines Alkanols, besonders bevorzugt eines C₁ bis C₂₀-Alkanols, ganz besonders bevorzugt eines C₁ bis C₁₀-Alkanols und speziell eines C₂ bis C₈-Alkanols durchzuführen.

Beispiele für Alkohole sind zusätzlich zu den unten aufgeführten Alkanolen beispielsweise Alkylengylkol- und Polyalkylenglykolmonoalkylether mit einem Molgewicht bis zu 300 g/mol, bevorzugt Polyethylenglykolmonoalkylether, bevorzugt Ethylenglykolmonomethylether, Ethylenglykolmonoethylether und 1,3-Propandiolmonomethylether.

Beispiele für Alkanole sind Methanol, Ethanol, *iso*-Propanol, n-Propanol, n-Butanol, *iso*-Butanol, *sek*-Butanol, *tert*-Butanol, n-Pentanol, n-Hexanol, n-Heptanol, n-Octanol, 2-Ethylhexanol, n-Decanol, n-Dodecanol (Laurylalkohol), Stearylalkohol, Cetylalkohol und Laurylalkohol.

Bevorzugte Verbindungen (V) sind Methanol, Ethanol, *iso*-Propanol, n-Propanol und n-Butanol, besonders bevorzugt sind Methanol, Ethanol und n-Butanol, ganz besonders bevorzugt sind Methanol und n-Butanol und insbesondere n-Butanol.

Die Verbindung (V) kann bereits von Beginn der Reaktion an vorliegen, bevorzugt wird sie jedoch zugegeben, wenn Formaldehyd, Harnstoff und CH-acider Aldehyd bereits zumindest teilweise miteinander reagiert haben.

Die Verbindung (V) kann dem Reaktionsgemisch portionsweise oder bevorzugt in einer Zugabe zugegeben werden.

In einer bevorzugten Ausführungsform wird die Verbindung (V) vor der Verbindung (IV) zugegeben.

Die Reaktion sollte nach Zugabe der Verbindung (V) noch mindestens 1 Stunde, bevorzugt mindestens 2 Stunden, ganz besonders bevorzugt mindestens 3 Stunden bei 50 bis 150 °C fortgeführt werden, so dass die Verbindung (V) im Wesentlichen in das Kondensationsharz eingebaut ist.

Falls gewünscht kann die Reaktion nach Zugabe bei Über- oder Unterdruck weitergeführt werden, bevorzugt bei Überdruck.

Die Menge der Verbindung (V) beträgt bezogen auf die eingesetzte Menge Harnstoff 0,05 bis 4 Äquivalente, bevorzugt 0,3 bis 3 Äquivalente und besonders bevorzugt 0,5 bis 1,5 Äquivalente.

Bei Erreichen des gewünschten Molekulargewichts bzw. Umsatzes wird die Kondensation gestoppt.

Zum Stoppen einer sauren Kondensation wird mit einer Base, beispielsweise Natrium- oder Kaliumalkanolat und bevorzugt NaOH oder KOH, neutralisiert und das vorhandene Wasser sowie gegebenenfalls enthaltene, destillativ abtrennbare niedere Oligomere oder unumgesetzte Monomere durch Destillation oder Strippen entfernt.

Analog wird eine basische Kondensation durch Neutralisieren mit Säure gestoppt.

Auf eine Neutralisierung mit Säure kann erfindungsgemäß bevorzugt verzichtet werden.

In der Regel ist es ausreichend, wenn das Salz mit Wasser ausgewaschen und das in der organischen Lösungsmittelphase gelöste Harz vom Lösungsmittel durch Destillation befreit.

Das Lösungsmittel wird in der Regel auf einen Restgehalt von nicht mehr als 5 Gew%, bevorzugt nicht mehr als 4 Gew%, besonders bevorzugt nicht mehr als 3 Gew%, ganz besonders bevorzugt nicht mehr als 2 Gew% und insbesondere nicht mehr als 1 Gew% abgetrennt.

Die Herstellung der erfindungsgemäßen Harze ist diskontinuierlich und kontinuierlich möglich.

Die nach dem erfindungsgemäßen Verfahren erhaltenen Kondensationsharze unterscheiden sich nicht wesentlich von den nach dem entsprechenden herkömmlichen Verfahren durch Umsetzung von Harnstoff, Formaldehyd und CH-aciden Aldehyden erhaltenen Produkten.

Sie weisen in der Regel ein zahlenmittleres Molgewicht Mₙ von 400 bis weniger als 1000 g/mol, bevorzugt von 450 bis 950 g/mol und besonders bevorzugt von 500 bis 900 g/mol auf, ein gewichtsmittleres Molgewicht M_{w} von 700 bis 3000, sowie eine Polydispersität von 1,4 bis 3,0.

Ermittelt wurden die Werte zum zahlenmittleren und gewichtsmittleren Molekulargewicht Mₙ und M_{w} mittels gelpermeationschromatographischer Messungen auf PL-GEL (3-Säulen-Kombination; 1 × Mini-Mix C und 2 × Mini-Mix E). Als Eluent wurde THF verwendet. Zur Kalibrierung wurden Polystyrol/Hexylbenzol-Referenzmaterialien mit Polydispersitäten von <1,1 verwendet. Die angegebenen Werte sind, soweit es sich nicht um Polymere des Styrols handelt, somit als Polystyrol-Äquivalente anzusehen. Verwendete Referenzmaterialien: Polystyrol von 3.000.000 bis 580 g/mol und Hexylbenzol 162 g/mol. Die Methode ist im Analytiker Taschenbuch Bd. 4, Seiten 433 bis 442, Berlin 1984 beschrieben.

Die Kondensationsharze weisen in der Regel eine Säurezahl gemäß DIN EN 2114 von weniger als 10 mg KOH/g auf, bevorzugt von weniger als 8, besonders bevorzugt von weniger als 5, ganz besonders bevorzugt von weniger als 3, insbesondere weniger als 2 und in speziellen Fällen weniger als 1 mg KOH/g auf.

Die Kondensationsharze weisen in der Regel eine Hydroxylzahl gemäß DIN ISO 4629 von 5 bis 60 mg KOH/g auf, bevorzugt von 10 bis 50, besonders bevorzugt von 15 bis 45 und ganz besonders bevorzugt von 20 bis 40 mg KOH/g auf.

Die Kondensationsharze weisen in der Regel eine Verseifungszahl gemäß DIN 53401 von weniger als 100 mg KOH/g auf, bevorzugt von 5 bis 90, besonders bevorzugt von 10 bis 70 und ganz besonders bevorzugt von 20 bis 50 mg KOH/g auf.

Die Kondensationsharze weisen in der Regel einen Restmonomerengehalt an Aldehyd (III), insbesondere an Isobutyraldehyd, von weniger als 500 Gew.ppm auf, bevorzugt von weniger als 400 Gew.ppm und besonders bevorzugt von weniger als 300 Gew.ppm.

Die Kondensationsharze weisen in der Regel einen Restmonomerengehalt an Formaldehyd, von weniger als 500 Gew.ppm auf, bevorzugt von weniger als 400 Gew.ppm, besonders bevorzugt von weniger als 300 Gew.ppm, ganz besonders bevorzugt von weniger als 200 und insbesondere von weniger als 100 Gew.ppm auf.

Die Kondensationsharze weisen in der Regel eine Glasübergangstemperatur Tg nach der DSC-Methode (Differential Scanning Calorimetry) gemäß ASTM 3418/82 mit einer Aufheizrate von 2,5 °C/min von weniger als 50 °C auf, bevorzugt von weniger als 40, besonders bevorzugt von weniger als 30, ganz besonders bevorzugt von weniger als 20 °C und insbesondere von weniger als 10 °C auf.

Die nach dem erfindungsgemäßen Verfahren hergestellten Kondensationsharze eignen sich insbesondere zur Herstellung von Pigmentpräparationen.

Dazu werden mindestens ein Pigment P und mindestens ein erfindungsgemäßes Kondensationsharz K, sowie gegebenenfalls mindestens ein Verdünnungsmittel V sowie gegebenenfalls mindestens ein Additiv AD miteinander vermischt.

Eine derartige Vermischung kann beispielsweise erfolgen in einem Rührbehälter, Mischer, Extruder oder bevorzugt in einem Dispergator, oder Kneter.

Pigmente sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel".

Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium.

Beispiele für Pigmente P umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepasst werden.

Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente; wie z.B. Aluminium-, Eisen- oder Kupferpigmente; Interferenzpigmente, wie z.B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃), metalloxidbeschichtetes Aluminium, oder Flüssigkristallpigmente.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente und Ruß.

Ferner ist Titandioxid als Pigment zu nennen.

Beispiele für Pigmente P sind aufgelistet in WO 97/08255, S. 8, Z. 11 bis S. 11, Z. 16, was hiermit Bestandteil der Offenbarung dieser Schrift sei.

Beispiele für Verdünnungsmittel V sind aromatische und/oder (cyclo)aliphatische Kohlenwasserstoffe und deren Gemische, halogenierte Kohlenwasserstoffe, Ester und Ether.

Bevorzugt sind aromatische Kohlenwasserstoffe, (cyclo)aliphatische Kohlenwasserstoffe, Alkansäurealkylester, alkoxylierte Alkansäurealkylester und deren Gemische.

Besonders bevorzugt sind ein- oder mehrfach alkylierte Benzole und Naphthaline, Alkansäurealkylester und alkoxylierte Alkansäurealkylester sowie deren Gemische.

Ganz besonders bevorzugt sind Xylol und 1-Methoxy-2-propylacetat.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell. Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155-180 °C, schwer: Siedebereich etwa 225 - 300 °C,) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

Halogenierte Kohlenwasserstoffe sind beispielsweise Chlorbenzol und Dichlorbenzol oder dessen Isomerengemische.

Ester sind beispielsweise n-Butylacetat, Ethylacetat, 1-Methoxy-2-propylacetat und 2-Methoxyethylacetat.

Ether sind beispielsweise THF, Dioxan sowie die Mono- und Dimethyl-, -ethyl- oder -n-butylether von Ethylenglykol, Diethylenglykol, Triethylenglykol, Propylenglykol, Dipropylenglykol oder Tripropylenglykol.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen.

Weiterhin bevorzugt sind n-Butylacetat, Ethylacetat, 1-Methoxy-2-propylacetat, 2-Methoxyethylacetat, sowie deren Gemische, insbesondere mit den oben aufgeführten aromatischen Kohlenwasserstoffgemischen.

Bevorzugt werden die erfindungsgemäß hergestellten Kondensationsharze zur Einstellung der Viskosität als 70 bis 90%ige Lösung in Xylol oder 1-Methoxy-2-propylacetat formuliert.

Additive AD sind beispielsweise Dispergiermittel, Verlaufshilfsmitteln, Weichmacher und Rheologiehilfsmittel. Derartige Stoffe sind dem Fachmann bekannt.

Die nach dem erfindungsgemäßen Verfahren erhaltenen Kondensationsharze werden bevorzugt eingesetzt in Pigmentpräparationen, enthaltend
- mindestens ein Pigment P,
- gegebenenfalls mindestens ein Verdünnungsmittel V,
- mindestens ein Kondensationsharz K sowie
- gegebenenfalls mindestens ein Additiv AD.

Typische Zusammensetzungen für derartige Pigmentpräparationen sind
- 10 - 80 Gew% P,
- 0 - 40 Gew% V,
- 10 - 70 Gew% K sowie
- 0 - 15 Gew% AD,
mit der Maßgabe, dass die Summe immer 100 Gew% beträgt.

Es stellt einen Vorteil der Kondensationsharze dar, dass durch deren Verwendung in den erfindungsgemäßen Pigmentpräparationen eine höhere Menge Pigment P eingebracht werden kann (Pigmentierungshöhe) und/oder die erforderliche Menge an Verdünnungsmittel V verringert werden kann, jeweils im Vergleich zu analogen Kondensationsharzen mit einem Erweichungspunkt von 80 °C oder mehr.

Zudem wird die Farbstärke der Pigmentpräparationen durch Verwendung der erfindungsgemäßen Kondensationsharze erhöht.

Ferner können die Kondensationsharze in Kombination mit anderen, üblicherweise als Lackbindemittel zu verwendenden physikalisch trocknenden Filmbildnern, wie Cellulosederivaten, z.B. Nitrocellulose, Ethylcellulose , Celluloseacetat, Celluloseacetobutyrat, Chlorkautschuk, Mischpolymerisaten auf Vinylester-, Vinylether-, Vinylchlorid-, Acrylester-, Vinylaromatenbasis, z.B. Vinylchlorid/Vinyliso-butyläthercopolymerisate oder chemisch trocknenden Bindemitteln, wie Alkydharzen, trocknenden und halbtrocknenden Ölen zur Herstellung von Lacken, wobei der Gehalt dieser Lacke an erfindungsgemäßen Kondensationsharz in weiten Grenzen variieren kann, in den meisten Fällen jedoch nicht mehr als 50 Gew.% des gesamten Bindemittels beträgt.

Diese Lackbindemittel eignen sich unter Anwendung üblicher Applikationsverfahren, wie Streichen, Spritzen, Gießen, zum Lackieren von Substraten, wie Holz, Spanplatten, Papier und Metall, z.B. Eisenblechen.

Die nach den erfindungsgemäßen Verfahren erhaltenen Kondensationsharze unterscheiden sich nicht wesentlich von den nach herkömmlichen Verfahren erhaltenen Kondensationsharzen und sind in den gleichen Anwendungen einsetzbar wie diese.

Sie lassen sich sehr vorteilhaft verarbeiten. Man erhält Lackierungen mit sehr guten mechanischen Eigenschaften, gutem Glanz, guter Lichtbeständigkeit und guter Wasserfestigkeit. Die erfindungsgemäßen Lackbindemittel sind beispielsweise sehr vorteilhaft in Spritzmattinen, Schnellschliffgrundierungen, Papierlacken und Korrosionsschutzlacken zu verwenden.

Die in den Beispielen angeführten Teile und Prozente bedeuten Gewichtsteile bzw. Gewichtsprozente.

### Beispiele

### Beispiel 1

968 g Hydroxypivalinaldehyd (8 mol) wurden in Form einer 70%ige wäßrigen Lösung in einem 2L Vierhalskolben mit Bodenauslass vorgelegt und auf 80°C erwärmt. 49,82 g Harnstoff (1 mol) wurde flüssig so zugegeben, dass die Kolbentemperatur nicht unter 60°C absinkt. Dann wurden 5 Tropfen von insgesamt 113,9 g Schwefelsäure (0,7 mol, 50%ig) zugetropft und ab Ende der Wärmefreisetzung der Rest Schwefelsäure zulaufen gelassen. Anschließend wurde das Reaktionsgemisch bei 80 °C über 3 h bei dieser Temperatur gehalten

Anschließend wurden 354 ml o-Xylol zugegeben, 5min gerührt und bei 80°C eine Phasentrennung durchgeführt. Die untere, wässrige Phase wurde abgelassen und die organische Phase unter Vakuum destilliert bis 80°C bei 100mbar erreicht sind. Anschließend wurden weitere 248 ml o-Xylol zugegeben.

Diesem Gemisch wurden 86,39 g (1 mol) Neopentylglykol und 12,61 g (0,08 mol) Toluol-4-sulfonsäure-Monohydrat zugegeben.
Es wurde 1 mol Reaktionswasser abdestilliert bis zu einer Temperatur von höchstens 90°C bei 100mbar, o-Xylol aus dem Destillat wurde in den Kolben zurückgeführt.
Anschließend wurde mit NaOH auf einen pH-Wert > 7 eingestellt.

Die organische Phase wurde viermal mit je 400 ml destilliertem Wasser gewaschen. Zur Phasentrennung wurde bei 80°C gerührt und die wässrige Phase abgetrennt.
Das Produkt wurde bis 145 °C/ 100 mbar vakuumdestilliert und das Endprodukt mit Methoxypropylacetat auf ca. 20000mPas eingestellt.
Ausbeute: 752g (677g Rohharz gelöst in 75g Methoxypropylacetat)

### Vergleichsbeispiel 1

490,29 g Formaldehyd (8 mol, 49%ig) und 60,06 g Harnstoff (1 mol) wurden vermischt und über Nacht bei Umgebungstemperatur stehengelassen.

Dieses Gemisch wurde in einem 2L Vierhalskolben mit Bodenauslass vorgelegt und auf 55°C erhitzt und 5 Tropfen von insgesamt 137,31 g Schwefelsäure (0,7 mol, 50%ig) zugetropft. Ab Ende der Wärmefreisetzung wurde der Rest Schwefelsäure zulaufen gelassen und auf Rückfluß erhitzt.
Innerhalb von ca. 15 min. wurden dann 576,8 g Isobutyraldehyd (8 mol) zugetropft. Anschließend wurde auf 80 °C erhitzt und 3 h bei dieser Temperatur gehalten.

Anschließend wurden 427 ml o-Xylol zugetropft, 5min gerührt und bei 80°C eine Phasentrennung durchgeführt. Die untere, wässrige Phase wurde abgelassen.

Die organische Phase wurde unter Vakuum bis 80°C bei 100mbar destilliert. Anschließend wurden weitere 299 ml o-Xylol zugegeben.

Diesem Gemisch wurden 104,15 g (1 mol) Neopentylglykol und 15,2 g (0,08 mol) Toluol-4-sulfonsäure-Monohydrat zugegeben.
Es wurde 1 mol Reaktionswasser abdestilliert bis zu einer Temperatur von höchstens 90°C bei 100mbar, o-Xylol aus dem Destillat wurde in den Kolben zurückgeführt.
Anschließend wurde mit NaOH auf einen pH-Wert > 7 eingestellt.

Die organische Phase wurde viermal mit je 400 ml destilliertem Wasser gewaschen. Zur Phasentrennung wurde bei 80°C gerührt und die wässrige Phase abgetrennt.
Das Produkt wurde bis 145 °C/ 100 mbar vakuumdestilliert und das Endprodukt mit Methoxypropylacetat auf ca. 20000mPas eingestellt.

Ausbeute: 844g (764g Rohharz gelöst in 80g Methoxypropylacetat)

Beide Ansätze haben eine im wesentlichen gleiche Viskosität (um 20.000 mPas), einen vergleichbaren Feststoffgehalt (etwa 90 Gew%) und weisen die gleichen anwendungstechnischen Eigenschaftenauf.

## Patentansprüche

1. Verfahren zur Herstellung von Kondensationsharzen, enthaltend als formale Aufbaukomponenten Harnstoff, Formaldehyd und CH-aciden Aldehyden, durch Umsetzung von mindestens einem Harnstoff der allgemeinen Formel (I) und/oder (II) 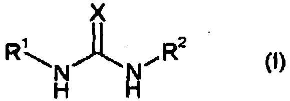 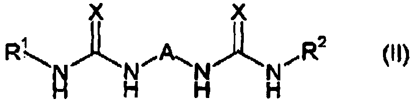 worin R¹ und R² unabhängig voneinander Wasserstoff oder gleiche oder verschiedene C₁ - C₂₀-Alkylreste , A einen C₁ - C₂₀-Alkylenrest und X Sauerstoff oder Schwefel bedeuten, mit mindestens einem 3-Hydroxypropionaldehydderivat der Formel (IIIa) 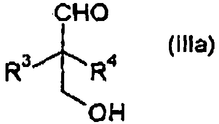 worin die Reste R³ und R⁴ unabhängig voneinander gleiche oder verschiedene Alkyl-, Cycloalkyl-, Aryl-, oder Alkylarylreste bedeuten oder R³ und R⁴ gemeinsam einen Ring bilden können, **dadurch gekennzeichnet, daß** Harnstoff und 3-Hydroxypropionaldehydderivat in einem Molverhältnis von 1:2 bis 1:12 miteinander umgesetzt werden und das 3-Hydroxypropionaldehydderivat der Formel (IIIa) einen Gehalt an Formaldehyd, in als Formal gebundener oder ungebundener Form, von nicht mehr als 5 Gew% aufweist.

2. Verfahren nach Anspruch 1, **dadurch gekennzeichnet, daß** es sich bei dem Harnstoff der Formel (I) oder (II) um Harnstoff (H₂N-(CO)-NH₂) handelt.

3. Verfahren nach Anspruch 1 oder 2, **dadurch gekennzeichnet, daß** der 3-Hydroxypropionaldehydderivat der Formel (IIIa) ausgewählt ist aus der Gruppe bestehend aus 3-Hydroxy-2,2-dimethylpropionaldehyd, 3-Hydroxy-2-ethyl-2-n-butyl-propionaldehyd, 3-Hydroxy-2-methyl-2-n-propyl-propionaldehyd und 3-Hydroxy-2-ethyl-2-n-butyl-propionaldehyd.

4. Verfahren gemäß einem der vorstehenden Ansprüche, **dadurch gekennzeichnet, daß** die Temperatur von 70 bis 150 °C und die Dauer von 10 Minuten bis 6 Stunden beträgt.

5. Verfahren gemäß einem der vorstehenden Ansprüche, **dadurch gekennzeichnet, daß** die Reaktion in Gegenwart von Säuren oder Basen als Katalysator und optional in Gegenwart von Lösungs- und/oder Verdünnungsmittel durchgeführt wird.

6. Verfahren gemäß einem der vorstehenden Ansprüche, **dadurch gekennzeichnet, daß** die Reaktion zusätzlich in Gegenwart mindestens einer Verbindung (IV) durchgeführt wird, die genau zwei nukleophile Gruppen aufweist, und ausgewählt ist aus der Gruppe bestehend aus Diol, Diamin, Dithiol, Aminoalkohol, Mercaptoalkohol und Mercaptoamin.

7. Verfahren gemäß einem der vorstehenden Ansprüche, **dadurch gekennzeichnet, daß** die Reaktion zusätzlich in Gegenwart mindestens eines C₁ bis C₂₀-Alkanols (V) durchgeführt wird.

## Claims

1. A process for preparing condensation resins, comprising as formal construction components urea, formaldehyde, and CH-acidic aldehydes, by reacting at least one urea of the general formula (I) and/or (II) 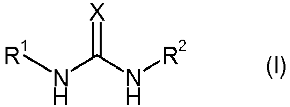 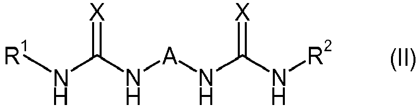 in which R¹ and R² independently of one another are hydrogen or identical or different C₁-C₂₀ alkyl radicals, A is a C₁-C₂₀ alkylene radical, and X is oxygen or sulfur with at least one 3-hydroxypropionaldehyde derivative of the formula (IIIa) 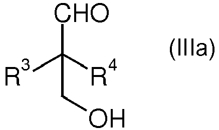 in which the radicals R³ and R⁴ independently of one another are identical or different alkyl, cycloalkyl, aryl or alkylaryl radicals, or R³ and R⁴ together may form a ring, wherein urea and 3-hydroxypropionaldehyde derivative are reacted with one another in a molar ratio of 1:2 to 1:12 and the 3-hydroxypropionaldehyde derivative of the formula (IIIa) has an amount of formaldehyde, in the form bound as a formal or in unbound form, of not more than 5% by weight.

2. The process according to claim 1, wherein the urea of the formula (I) or (II) is urea (H₂N-(CO)-NH₂).

3. The process according to claim 1 or 2, wherein the 3-hydroxypropionaldehyde derivative of the formula (IIIa) is selected from the group consisting of 3-hydroxy-2,2-dimethylpropionaldehyde, 3-hydroxy-2-ethyl-2-n-butylpropionaldehyde, 3-hydroxy-2-methyl-2-n-propylpropionaldehyde, and 3-hydroxy-2-ethyl-2-n-butylpropionaldehyde.

4. The process according to any of the preceding claims, wherein the temperature is from 70 to 150°C and the time is from 10 minutes to 6 hours.

5. The process according to any of the preceding claims, wherein the reaction is carried out in the presence of acids or bases as catalyst and optionally in the presence of solvent and/or diluent.

6. The process according to any of the preceding claims, wherein the reaction is carried out additionally in the presence of at least one compound (IV) which has precisely two nucleophilic groups and is selected from the group consisting of diol, diamine, dithiol, amino alcohol, mercapto alcohol, and mercapto amine.

7. The process according to any of the preceding claims, wherein the reaction is carried out additionally in the presence of at least one C₁ to C₂₀ alkanol (V).

## Revendications

1. Procédé pour la préparation de résines de condensation, contenant, comme composants constitutifs formels, de l'urée, du formaldéhyde et des aldéhydes à CH acide, par transformation d'au moins une urée de formule générale (I) et/ou (II) 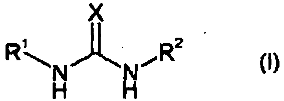 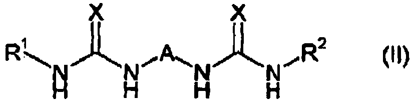 dans lesquelles R¹ et R² signifient, indépendamment l'un de l'autre, hydrogène ou des radicaux C₁-C₂₀-alkyle identiques ou différents, A signifie un radical C₁-C₂₀-alkylène et X signifie oxygène ou soufre, avec au moins un dérivé de 3-hydroxypropionaldéhyde de formule (IIIa) 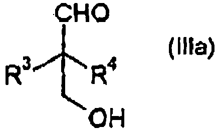 dans laquelle les radicaux R³ et R⁴ signifient, indépendamment l'un de l'autre, des radicaux alkyle, cycloalkyle, aryle ou alkylaryle identiques ou différents ou R³ et R⁴ forment ensemble un cycle, **caractérisé en ce que** l'urée et le dérivé de 3-hydroxypropionaldéhyde sont transformés l'un avec l'autre dans un rapport molaire de 1:2 à 1:12 et le dérivé de 3-hydroxypropionaldéhyde de formule (IIIa) présente une teneur en formaldéhyde, sous forme formellement liée ou non liée, qui n'est pas supérieure à 5% en poids.

2. Procédé selon la revendication 1, **caractérisé en ce qu'**il s'agit, pour l'urée de formule (I) ou (II), d'urée (H₂N-(CO)-NH₂).

3. Procédé selon la revendication 1 ou 2, **caractérisé en ce que** le dérivé de 3-hydroxypropionaldéhyde de formule (IIIa) est choisi dans le groupe constitué par le 3-hydroxy-2,2-diméthylpropionaldéhyde, le 3-hydroxy-2-éthyl-2-n-butylpropionaldéhyde, le 3-hydroxy-2-méthyl-2-n-propylpropionaldéhyde et le 3-hydroxy-2-éthyl-2-n-butylpropionaldéhyde.

4. Procédé selon l'une quelconque des revendications précédentes, **caractérisé en ce que** la température est de 70°C à 150°C et la durée est de 10 minutes à 6 heures.

5. Procédé selon l'une quelconque des revendications précédentes, **caractérisé en ce que** la réaction est réalisée en présence d'acides ou de bases comme catalyseur et éventuellement en présence de solvants et/ou de diluants.

6. Procédé selon l'une quelconque des revendications précédentes, **caractérisé en ce que** la réaction est en outre réalisée en présence d'au moins un composé (IV), qui présente exactement deux groupes nucléophiles et qui est choisi dans le groupe constitué par un diol, une diamine, un dithiol, un aminoalcool, un mercaptoalcool et une mercaptoamine.

7. Procédé selon l'une quelconque des revendications précédentes, **caractérisé en ce que** la réaction est en outre réalisée en présence d'au moins un C₁-C₂₀-alcanol (V).
